# EUROPÄISCHE PATENTANMELDUNG

(11) **EP 1 852 344 A1**
(43) Veröffentlichungstag der Anmeldung: **07.11.2007**
(21) Anmeldenummer: 07007937.1
(22) Anmeldetag: 19.04.2007
(51) Int. Cl.: B63B 1/06

(54) **Schiffsform zur Verbesserung der Transportleistung**

(30) Priorität: 05.05.2006 DE 102006020884
(71) Anmelder: Nordseewerke GmbH, 26725 Emden (DE)
(72) Erfinder: Abt, Claus, Dipl.-ing., 14797 Berlin (DE); Harries, Stefan, Dr.-Ing., 12101 Berlin (DE); Hochkirch, Karsten, Dr.-Ing., 14129 Berlin (DE); Hinrichsen, Haye, Dipl.-Ing., 28717 Bremen (DE)
(74) Vertreter: Hansmann, Dierk

(57) **Zusammenfassung**

Bei einem Schiffsrumpf mit einem gekrümmten Vorschiffsbereich sind in der von der Form abgeleiteten Spantarealkurve und/oder in wenigstens einem Wasserlinienschnitt wenigstens zwei zusätzliche Wendepunkte vorgesehen, die durch zwischen diesen befindliche Bereiche mit stückweise stetigem Kurvenverlauf voneinander getrennt sind. Der Rumpf kann dabei sowohl einen Bugwulst als auch ein paralleles Mittelschiff aufweisen und in Rundspantbauweise oder aber in Knickspantbauweise ausgebildet sein.

## Beschreibung

Die Erfindung betrifft einen Schiffsrumpf für Einrumpf- und Mehrrumpfschiffe mit einem gekrümmten Vorschiffsbereich.

Schiffe mit Rümpfen dieser Art dienen in der Regel dem Transport von Gütern auf dem Seeweg. Die Transportleistung von Schiffen errechnet sich dabei im wesentlichen aus dem Verhältnis der Nutzlast zu der für den Transport benötigten Zeit. Eine Verbesserung der Transportleistung wird somit dann erreicht, wenn bei gegebener Antriebsleistung die Geschwindigkeit des Schiffes erhöht werden kann oder wenn bei gleicher Geschwindigkeit mehr Nutzlast bei gleichbleibender Antriebsleistung transportiert werden kann, das heißt das Schiff über eine größere Verdrängung verfügt.

Aufgabe der Erfindung ist es, einen Schiffsrumpf der eingangs genannten Art derart auszubilden, daß er eine Verbesserung der Transportleistung eines Schiffes ermöglicht.

Die Lösung dieser Aufgabe besteht darin, daß die Kurve der Spantflächen (Spantarealkurve) im Vorschiffsbereich wenigstens zwei zusätzliche Wendepunkte aufweist und/oder ein oder mehrere Wasserlinienschnitte im Vorschiffsbereich wenigstens zwei zusätzliche Wendepunkte aufweisen.

Hierdurch kann sich in der Schiffsform beispielsweise eine Ausbeulung darstellen, wodurch die Wellensysteme positiv beeinflußt werden und bei gleicher Geschwindigkeit der Wellenwiderstand reduziert wird.

Die auf diese Weise bei dem erfindungsgemäßen Schiffsrumpf vorgesehene Volumenverteilung ermöglicht dabei eine deutliche Verbesserung der Transportleistung durch eine Erhöhung der Nutzlast bei gleicher Antriebsleistung einerseits und/oder durch eine Verringerung des Brennstoffverbrauches bei gleicher Nutzlast infolge des reduzierten Widerstandes andererseits. Die realisierte Schiffsform ist dabei in gleicher Weise sowohl auf Schiffe mit einem Bugwulst als auch auf solche ohne Bugwulst anwendbar. Sie eignet sich für den Neubau ebenso wie für den nachträglichen Umbau von Schiffen. Dabei kann es sich um einen Rumpf mit oder ohne paralleles Mittelschiff handeln. Der Rumpf kann in Knickspant- oder in Rundspantbauweise ausgeführt sein, wobei es sich um Schiffe mit nur einem Rumpf oder um Schiffe mit mehreren Rümpfen handeln kann, wie durch die Merkmale der Unteransprüche gekennzeichnet ist. Nachfolgend wird eine Anordnung gemäß der Erfindung anhand eines schematischen Ausführungsbeispieles erläutert. Es zeigen:
- Fig. 1: eine Spantarealkurve eines Handelsschiffes gemäß dem Stand der Technik;
- Fig. 2: eine erfindungsgemäße Ausbildung einer Spantarealkurve;
- Fig. 3: einen Satz von Wasserlinienschnitten im Bereich des Vorschiffes gemäß dem Stand der Technik;
- Fig. 4: einen Satz von Wasserlinienschnitten einer erfindungsgemäßen Ausbildung im Bereich des Vorschiffes.

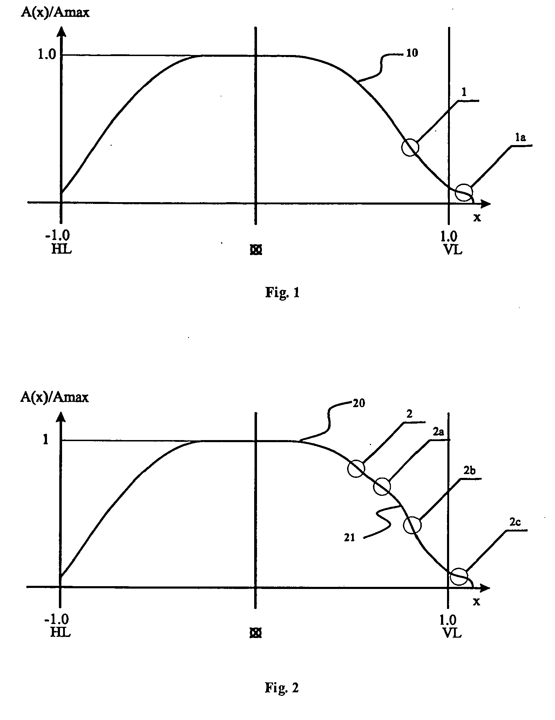

Die Figuren 1 und 2 zeigen jeweils Spantarealkurven 10, 20 in einer im Schiffsentwurf üblichen Darstellungsweise. In x-Richtung der Darstellungen ist jeweils die Schiffslängsachse in einem auf die halbe Schiffslänge zwischen den Loten normierten Koordinatensystem dargestellt. HL bezeichnet das Hintere Lot, VL das vordere Lot. Auf der Ordinate sind die mit der maximalen Spantfläche normierten Spantflächen des getauchten Teils des Schiffes aufgetragen und durch die Spantarealkurve verbunden. Die Position des Bereiches mit maximaler Spantfläche kann sowohl auf halber Schiffslänge als auch vor und hinter der halben Schiffslänge liegen. Als Vorschiffsbereich wird der vordere Schiffsteil bis zur vordersten Position der maximalen Spantfläche verstanden. Anhand des über das Vordere Lot hinausgehenden Teils der Spantarealkurve 10 in Fig. 1 ist erkennbar, daß es sich bei dem in dieser Figur dargestellten Schiffsrumpf als Beispiel herkömmlicher Bauweise um ein Schiff mit einem Bugwulst handelt. Bei einem solchen Schiff mit Bugwulst weist die Spantarealkurve 10 zwei Wendepunkte 1 und 1a auf. Dies ist gleichbedeutend mit der Aussage, daß sich der Betrachter, wenn er sich entlang der Spantarealkurve bewegt, von der Mitte des Schiffes her kommend zunächst in eine Rechtskurve begibt, bei 1 in eine Linskurve und bei 1a schließlich wieder in eine Rechtskurve. Die Übergänge von einer Kurvenrichtung in eine andere bilden die beschriebenen Wendepunkte 1 und 1a.

Die in Fig. 2 dargestellte Spantarealkurve 20 zeigt eine Verteilung des Verdrängungsvolumens bei einem Schiffsrumpf gemäß der Erfindung. In diesem Fall begibt sich der Betrachter, von der Mitte des Schiffes her kommend, auf der Spantarealkurve 20 zuerst in eine Rechtskurve, die aber bei einem ersten Wendepunkt 2 in eine Linkskurve übergeht. Weitere Wechsel der Krümmungsrichtung erfolgen in den weiteren Wendepunkten 2a, 2b und 2c. Die Wendepunkte 2a und 2b sind dabei, im Vergleich zu der in Fig. 1 dargestellten herkömmlichen Schiffsform, zusätzlich vorgesehen, während die Wendepunkte 2 und 2c den beiden Wendepunkten 1 und 1a bei herkömmlichen Schiffsrümpfen mit einem Bugwulst entsprechen. Die zusätzlich vorgesehenen Wendepunkte 2a, 2b sind durch einen dazwischen liegenden Bereich 21 mit einem im mathematischen Sinne stückweise stetigen Kurvenverlauf voneinander getrennt.

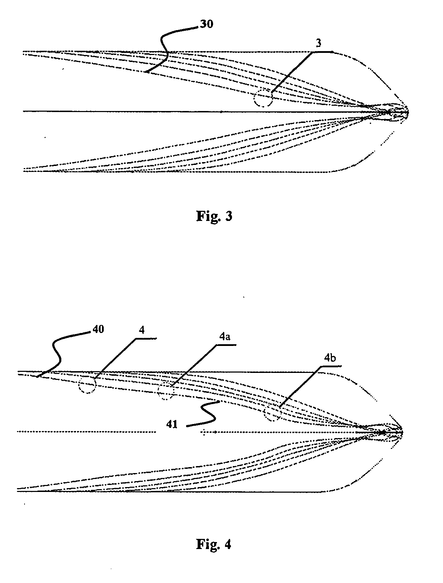

In den Darstellungen der Figuren 3 und 4 sind die Wasserlinienschnitte eines Handelsschiffes einmal in der heute üblichen Form und in Fig. 4 mit einer Rumpfform gemäß der

Erfindung dargestellt. Derartige Wasserlinienschnitte sind gedachte, horizontale Schnitte an der Grenzfläche zwischen Wasser und Schiff (Schiffsaußenhaut), die im Schiffsentwurf zur Beurteilung der Schiffsform herangezogen werden. In Fig. 3 ist ein Wendepunkt 3 im Vorschiffsbereich einer Wasserlinie 30 bei einem Schiffsrumpf in herkömmlicher Bauweise markiert. Demgegenüber zeigt Fig. 4 die mit zwei zusätzlichen Wendepunkten 4a und 4b im Vorschiffsbereich versehene Wasserlinie 40 eines Schiffsrumpfes gemäß der Erfindung. Der Wendepunkt bei 4 in Fig. 4 entspricht dem Wendepunkt 3 in der Darstellung gemäß Fig. 3. Auch bei dieser Darstellungsweise sind die zusätzlich vorgesehenen Wendepunkte 4a, 4b durch einen dazwischen liegenden Bereich 41 mit einem stückweise stetigen Kurvenverlauf voneinander getrennt.

Die Erfindung ist nicht auf die hier beschriebenen Ausführungsbeispiele beschränkt. Insbesondere sind hinsichtlich der Anzahl und der Lage der erfindungsgemäß vorgesehenen zusätzlichen Wendepunkte vielfältige Varianten möglich, ohne den Rahmen der Erfindung zu verlassen.

## Patentansprüche

1. Schiffsrumpf für Einrumpf- und Mehrrumpfschiffe mit einem gekrümmten Vorschiffsbereich, **dadurch gekennzeichnet, daß** die Kurve (20) der Spantflächen (Spantarealkurve) im Vorschiffsbereich wenigstens zwei zusätzliche Wendepunkte (2a, 2b) aufweist und/oder ein oder mehrere Wasserlinienschnitte (40) im Vorschiffsbereich wenigstens zwei zusätzliche Wendepunkte (4a, 4b) aufweisen.

2. Schiffsrumpf nach Anspruch 1, **dadurch gekennzeichnet, daß** der Rumpf einen Bugwulst aufweist.

3. Schiffsrumpf nach einem der Ansprüche 1 oder 2, **dadurch gekennzeichnet, daß** der Rumpf ein paralleles Mittelschiff aufweist.

4. Schiffsrumpf nach einem der Ansprüche 1 bis 3, **dadurch gekennzeichnet, daß** der Rumpf in Rundspantbauweise ausgebildet ist.

5. Schiffsrumpf nach einem der Ansprüche 1 bis 3, **dadurch gekennzeichnet, daß** der Rumpf in Knickspantbauweise ausgebildet ist.

## Geänderte Patentansprüche

### Geänderte Patentansprüche gemäss Regel 86(2) EPÜ.

**1.** Schiffsrumpf für Einrumpf- und Mehrrumpfschiffe mit einem gekrümmten Vorschiffsbereich und einem stetigen Kurvenverlauf bzw. mit sich aus einer Volumenverteilung ergebenden Wendepunkten (2, 2c), wobei eine Kurve (20) der Spantflächen als Spantarealkurve im Vorschiffsbereich wenigstens zwei zusätzliche Wendepunkte (2a, 2b) aufweist und/oder ein oder mehrere Wasserlinienschnitte (40) im Vorschiffsbereich wenigstens zwei Wendepunkte (4a, 4b) zusätzlich zum stetigen Verlauf bzw. zu den vorhandenen Wendepunkten (4) aufweisen.

**2.** Schiffsrumpf nach Anspruch 1, **dadurch gekennzeichnet, daß** der Rumpf einen Bugwulst aufweist.

**3.** Schiffsrumpf nach einem der Ansprüche 1 oder 2, **dadurch gekennzeichnet, daß** der Rumpf ein paralleles Mittelschiff aufweist.

**4.** Schiffsrumpf nach einem der Ansprüche 1 bis 3, **dadurch gekennzeichnet, daß** der Rumpf in Rundspantbauweise ausgebildet ist.
